# EUROPEAN PATENT SPECIFICATION

(11) **EP 4 411 191 B1**
(45) Date of publication and mention of the grant of the patent: **04.11.2026**
(21) Application number: 23382096.8
(22) Date of filing: 02.02.2023
(51) Int. Cl.: F16L 27/04

(54) **BALL JOINT**
KUGELGELENK
JOINT À ROTULE

(43) Date of publication of application: 07.08.2024
(73) Proprietor: ITP Externals, S.L.U., 48160 Derio (ES)
(72) Inventor: BELTRÁN PARÍS, José Francisco, E-48160 Derio (ES)
(74) Representative: ABG Intellectual Property Law, S.L.

(56) References cited:
- WO-A1-2024/089318
- DE-U1- 9 404 481
- US-A- 5 611 577
- US-A1- 2015 338 003

## Description

### OBJECT OF THE INVENTION

The present invention relates to a ball joint for connecting together two tubular portions of a duct assembly in a gas turbine engine and allows angular movement between these two tubular portions. More particularly, the invention relates to an improved configuration of ball joint provided with local thickening that significantly improves the mechanical properties of the ball joint.

### BACKGROUND OF THE INVENTION

Turbine engines, and particularly gas or combustion turbine engines, are rotary engines that extract energy from a flow of combusted gases passing through the engine in a series of compressor stages, which include pairs of rotating blades and stationary vanes, through a combustor, and then onto a multitude of turbine stages, also including multiple pairs of rotating blades and stationary vanes.

Duct assemblies are provided about the turbine engine and provide conduits for the flow of various operating fluids to and from the turbine engine. For example, one of the operating fluids in the turbine engine is bleed air. Current systems use ball joints or axial joints in the duct to meet requirements for flexibility, which compromise system dynamic performance by increasing the weight of the system.

In a typical aircraft mounted gas turbine engine, ball joints are used for joining together pressurized fluid carrying conduits which requires articulation there between. An integral bellows seal is provided inside the ball joints for preventing leakage of fluid flow there through while allowing articulation of the ball joint itself.

The current configuration of ball joints has a structure composed with components manufactured by forming whose materials are compatible with forming process. This has the disadvantage of limiting the materials that can be used and has an impact on bending moment due to the intrinsic tolerances of the forming processes. In addition, the current ball joint components have a quasi-constant thickness which leads to an increase in weight due to non-optimized thicknesses. Moreover, these known ball joints needs large thicknesses to support the loads and maintenance of the ball joint structure itself and also needs stress concentrators.

US 5 611 577 discloses a ball joint including a tubular outer shroud having a one-piece socket which receives a complementary ball of a tubular inner shroud.

WO 2024/089318 A1 constitutes prior art according to Art. 54(3) EPC and discloses a ball joint connection for engine piping connecting two fluid conduits. It includes an annular casing with inner and outer elements, an annular bearing between them, and a metallic bellows fixed at both ends to the inner and outer elements.

The present invention provides a ball joint with an improved configuration of local thickening that avoids, among other things, the above drawbacks that the current ball joints presents.

### DESCRIPTION OF THE INVENTION

The present invention provides a ball joint according to claim 1 and a duct assembly according to claim 11. In dependent claims, preferred embodiments of the invention are defined.

A first aspect of the invention provides *a ball joint for duct assembly of a gas turbine engine.* Ball joints are used in fluid lines to impart limited flexibility for the purpose of accommodating tolerances, thermal expansion and vehicular motion. The present ball joint is intended for joining two tubular portions of a duct assembly of a gas turbine engine, however, this ball joint can be used in almost any type of fluid line. In particular, the present ball joint is configured for joining a first tubular portion with a second tubular portion, both tubular portions of the duct assembly. Each tubular portions of the duct assembly has a longitudinal axis.

*The ball joint comprising:*
- *a housing configured to connect a first and second tubular portions of the duct assembly, the first and second tubular portions having respective longitudinal axis,*
- *a bellow arranged inside the housing and connected to the housing, the bellow being configured with limited flexure capability to accommodate variations in the angle between the longitudinal axes of the first and second tubular portions respectively;*

*the housing being further configured to hold the tubular portions against axial forces while allows the flexure of the bellow within predetermined angle limits.*

The present ball joint is provided to support the articulation between the two tubular portions of the duct assembly through the housing and the flexure capability of the bellow. The ball joint primarily allows the bellow to flex while holding the tubular portions of the duct assembly together, without axial deformation. Specifically, the housing prevents the axial movement of the two tubular portions. The tubular portions of the duct assembly rotate in solidarity with the respective shrouds of the housing to which they are attached. Therefore, when the tubular portions of the duct assembly are pressurized, the ball joint allows the bellow to flex within predetermined angle limits beyond which the ball joint would be broken in that the shrouds of the housing would be uncoupled and the bellow would stretch freely. That is, the flexure capability of the bellow is limited to accommodate variations in the angles which the longitudinal axes of the tubular portions form with respect to one another. The bellow serves to permit relative flexure within a limited angular range between the tubular portions of the duct assembly while maintaining the water tightness inside the duct. Thus, the present ball joint allows only turns with respect to the center of the sphere that conform the housing.

The housing holds the tubular portions of the duct assembly against axial forces due to the relative movement between these two tubular portions of the duct assembly. Moreover, the housing constrains the flexure of the bellow according to a predetermined angle limits, where these angle limits correspond to the maximum and minimum angles that the longitudinal axes of the tubular portions form with respect to one another.

The housing covers the bellow and the bellow is attached at its ends to the housing, in particular at the ends of the housing which are attached to each tubular portion respectively.

*The housing comprising:*
- *an inner shroud extending from a first end to a second end, the first end being configured to be in contact with the first tubular portion of the duct assembly and the second end being located over the bellow, and*
- *an outer shroud extending from a first end to a second end, the first end being configured to be in contact with the second tubular portion of the duct assembly and the second end being arranged above the inner shroud, so that the outer shroud partially overlaps above the inner shroud, forming an overlapping interface between the inner shroud and the outer shroud.*

The housing is formed by two shroud, an inner and outer shroud. These shroud are called one outer and the other inner as one of the shroud, the outer shroud, partially overlaps above the inner shroud. This overlapping provides an overlapping interface between the shrouds. According to the invention, the overlapping interface is a contact region between the surfaces of the inner shroud and outer shroud.

The inner shroud is configured to be attached to the first tubular portion of the duct assembly in a first end of the inner shroud, so that the inner shroud is cantilevered over the bellow, the second end of the inner shroud being arranged over the bellow. The outer shroud is configured to be attached to the second tubular portion of the duct assembly in a first end of the outer shroud and rest on the inner shroud so that a second end of the outer shroud being located above the inner shroud.

*The inner shroud comprises a first thickening at a region located between the first end and the second end and a spherical portion extending between the second end and the first thickening; the outer shroud comprises a spherical portion arising from the second end and a second thickening at its second end.*

The present ball joint is configured with the provision of two thickening arranged each in each shroud of the housing. Specifically, a first thickening arranged at a region of the inner shroud between the first end and the second end of the inner shroud; and a second thickening located in the second end of the outer shroud. Furthermore, both shrouds comprise a spherical portion extended at least in regions of each shroud between which the overlapping interface if provided due to the outer shroud partially overlaps the inner shroud. The two spherical portions of the shrouds are intended to be partially in contact with each other.

These two thickenings advantageously significantly improve the mechanical properties of ball joint so that the stress level of the ball joint is reduced while axial stiffness increases, and the deformation of the "spherical surface" provided by the inner and outer shrouds is reduced which impacts on the improvement of bending moment and load distribution of the ball joint.

Comparative test have been developed between a ball joint without the thickenings (prior art solutions) and a ball joint with the two thickening described above (according to this invention) to compare the stresses experienced by each ball joint under equal loads. From these tests, results have been obtained which indicate that the stress level goes from 1000 MPa to 180 MPa at equal loads from a ball joint without thickenings to a ball joint with the thickenings. The result has also been an increase in axial stiffness from 35 KN/mm TO 100KN/mm, as well as the deformation of the spherical surface of the housing is reduced by 50% improving the bending moment and load distribution.

*In a rest position where the ball joint is not subjected to flexure stresses, the overlapping interface between the inner shroud and the outer shroud is annularly constant along the ball joint; and in at least one operating position where the ball joint is subjected to flexure stresses, the overlapping interface between the inner shroud and the outer shroud varies annularly along the ball joint while the outer shroud still overlaps over the inner shroud.*

The present ball joint comprises at least two positions, a rest position and at least one operating position. The difference between these positions is whether the ball joint is subjected to flexure stresses or not, that is, the rest position is when the longitudinal axes of the first and second tubular portions are parallel or form an angle 0 to each other; and the operating position is when the longitudinal axes of the first and second tubular portions form an angle different from 0. As the angle formed by the two longitudinal axes of the tubular portions of the duct assembly can vary according to the relative movement between these tubular portions, the ball joint may comprise several operating positions, although for all of them there will always be an overlapping interface between the inner shroud and the outer shroud. Therefore, the rest position of the ball joint corresponds to the position in which the ball joint is not rotated while the operating positions correspond to the positions in which the ball joint is rotated compared to the rest position. Due to the pressurization of the ducts, the shrouds of the housing rotate relative to each other, which will be understood as the rotation of the ball joint being the one that allows the bellow to flex. The ball joint may rotate around two rotating axes, a first rotating axis through which the ball joint rotates allowing the bellow flexure and, a second rotation axis through which the ball joint rotates allowing the bellow torsion. Throughout this document, the rotation of the ball joint will be referred to as the rotation leading to the flexure of the bellow and not to the bellow torsion.

For the rest position of the ball joint, the term "annularly" will be understood relative to the longitudinal axes of the tubular portions; and for any of the operating positions of the ball joint, the term "annularly" will be understood relative to the longitudinal axis of any of the tubular portions, either with respect to the first or to the second longitudinal axis.

The fact that the overlapping interface varies annularly along the ball joint between the two shrouds of the housing means that the contact region between the surfaces of the shrouds may either increase or decrease along the ball joint when the ball joint is rotated (or subjected to flexure stresses). Thus, when the ball joint is subjected to flexure stresses, there will be sections where the overlapping interface remains constant, increases and/or decreases with respect to other sections or to the rest position.

The main object of this type of ball joint is to allow its rotation in a controlled manner without it suffering excessively, i.e. by reducing as far as possible the stress levels to which it is subjected. This is achieved in an improved way thank to the thickenings and their exact location. In the rest position of the ball joint, the two thickenings are located next to each other, which benefits the function of the present ball joint.

Advantageously, the new configuration of the present ball joint compared to prior art ball joints, provides a significant weight reduction at equal ball joint stress levels, increased axial stiffness, and reduction of the bending moment associated with the deflection of the spherical sliding surface of the outer shroud.

According to the invention, *the first thickening is a reinforcement ring extending annularly along the inner shroud, and the second thickening is a reinforcement ring extending annularly along the outer shroud at its second end.* Both thickenings are reinforcement rings surrounding the entire ball joint from tis respective shroud. These thickenings provide a local reinforcement that advantageously reduces the deformation suffered by the inner and outer shroud by 50% due to the rotation of the ball joint.

According to the invention, *the first thickening is configured as a projection in an inner surface of the inner shroud so that the projection protrudes towards the bellow.* The inner shroud comprises an inner surface faced to the inside of the ball joint or the bellow, and from this inner surface, between the first and second end of the inner shroud, a projection in the form of a reinforcement ring protrudes towards the inside of the ball joint or the bellow. This first thickening protrudes inwards into the ball joint.

According to the invention, *the second thickening is configured as a projection in an outer surface of the outer shroud so that the projection protrudes towards outside the ball joint.* The outer shroud comprises an outer surface faced to the outside of the ball joint, and from this outer surface, at the second end of the outer shroud, a projection in the form of a reinforcement ring protrudes outwards the ball joint. This second thickening protrudes outwards the ball joint.

The first and second thickenings counteract the deformation suffered by the inner and outer shroud due to axial pressure loads so that the stiffness provided by the reinforcement ring means that both the inner and the outer shroud do not flex. That is, when the shrouds of the housing are under pressure, the provision of the thickening in both shrouds of the housing provide stiffness such that the housings do not decouple, i.e. there is no longer any overlapping surface between the shrouds of the housing. Therefore, the thickenings located in the housing increase the flexure stiffness both inwards and outwards in the housing.

These thickenings provided on the inner and outer shrouds respectively advantageously lightens the weight of the ball joint compared to the prior art solutions which use additional reinforcement elements (in some examples independent of the shrouds), which in turn makes their connection to other elements of the ball joint more difficult and more laborious to manufacture and assembly.

In an embodiment, *the ball joint further comprises a first and second liners that extend cantilevered from the first ends of the inner and outer shroud respectively, wherein the below is supported at its ends on the first and second liners respectively.* From each first end of the inner and outer shroud a liner is cantilevered extended and the bellow is attached at its end on these liners. That is, the bellow is supported by the liners and being in contact with the housing through said liners. Advantageously, the liners provides a correct support for the bellow.

In a more particular embodiment, *each liner comprises an extension partially covering the bellow so that the bellow being housed between the housing and the extensions of the liners.* These extensions from the liners are understood as aerodynamics fairing that shields the bellow from the air flow inside the duct assembly, mainly when fluid velocities exceed Mach 0.3.

In another embodiment, *the bellow is directly attached to the housing so that he bellow being supported at its ends on the first ends of the inner and outer shroud respectively.* As an alternative to the provision of liners on which the bellow is supported, the bellow may be attached to the housing in such a way that the bellow being supported at the first ends of the shrouds. Preferably, the bellow is attached to the inner and outer shroud by means of an appendix which is integral to the shrouds so that the bellow being attached to the underside of the appendix in order to facilitate the manufacturing process.

In an embodiment:
- *the inner shroud comprises a first ribbed pattern arranged annularly at an inner surface of the inner shroud, the first ribbed pattern corresponding to indentations on the inner surface of the inner shroud; and*
- *the outer shroud comprises a second ribbed pattern arranged annularly at an outer surface of the outer shroud, the second ribbed pattern corresponding to projections on the outer surface of the outer shroud.*

The provisions of these ribbed patterns both on the inner shroud and outer shroud advantageously reduces the weight of the ball joint which. These ribbed pattern are understood as reinforcement ribbed mesh on the shrouds, specifically, for the inner shroud the first ribbed pattern corresponds to indentations in the form of grooves on the inner surface of the inner shroud, and for the outer shroud the second ribbed pattern corresponds to projections that protrudes from the outer surface of the outer shrouds towards outside the ball joint. These ribbed patterns allows the shrouds of the housing to have sufficient thickness to provide rigidity to the ball joint as the ribbed patterns are intended to lighten the housing and in effect the ball joint.

In a more particular embodiment, *the second ribbed pattern is arranged downstream of the second end of the outer shroud along a portion of the outer surface; and the first ribbed pattern is arranged between the first thickening and the second end of the inner shroud.* Advantageously, the provision of the first and the second ribbed patterns reduce the weight of the ball joint while maintaining the stiffness of the shrouds.

In a more particular embodiment, *the first and second ribbed pattern have an isogrid configuration.* In another embodiments, the ribbed patterns have any configuration different from isogrid.

In an embodiment, *both inner shroud and outer shroud are 3D printed structures.* The reinforcements provided by the thickening in the ball joint take advantage of the capabilities of additive manufacturing o 3D printing to significantly improve the mechanical characteristic of the ball joint at minimal added cost. Advantageously, the 3D printing of these shrouds of the housing allows the inclusion of the thickening that clearly improve functionality in a cost-effective way. In addition, the use of the additive manufacturing allows the stiffness of the shrouds of the ball joint, specifically in their sliding areas, to be optimized. Moreover, additive manufacturing reduces the loss of materials in the manufacturing process as well as being less costly than other techniques used in the prior art, such as the machined manufacturing.

In an embodiment, *the outer shroud is formed by two portions, the spherical portion and the remaining portion, and wherein these two portions are joined, preferably by welding.* This specific configuration of the outer shroud is needed in order to accommodate the outer shroud partially around the inner shroud since the outer shroud cannot be deformed.

In a more particular embodiment, *the two portions of the outer shroud are joined by high energy beam welding, preferably laser welding, and wherein the remaining portion comprises at its end where it is welded to the spherical portion a step on which a joining end of the spherical portion rests.* Advantageously, the impact of the weld on the shroud is reduced, therefore the provisions of a step provides protection on the outer shroud when welding between portions, in addition the step prevents the beam or laser from going beyond the welding and impacting on the bellow inside the ball joint.

A second aspect of the invention provides *a duct assembly of a gas turbine engine comprising a first duct with a first tubular portion, a second duct with a second tubular portion and at least one ball joint according to the first inventive aspect, wherein the first tubular portion of the first duct is connected to the first end of the inner shroud of the at least one ball joint and the second tubular portion of the second duct is connected to the first end of the outer shroud of the at least one ball joint.*

### DESCRIPTION OF THE DRAWINGS

These and other features and advantages of the invention will be more clearly understood based on the following detailed description of a preferred embodiment given only by way of illustrative and non-limiting example in reference to the attached drawings.
Figure 1 shows a schematic frontal view of a duct assembly comprising a ball joint according to an embodiment of the present invention.
Figure 2 shows a schematic cross sectional view of a ball joint according to an embodiment of the present invention.
Figure 3 shows a schematic cross sectional view of a ball joint according to another embodiment of the present invention.
Figure 3A shows a detail of figure 3.
Figure 4A shows a schematic frontal view of a ball joint in a rest position according to an embodiment of the present invention.
Figure 4B shows a schematic frontal view of a ball joint in an operating position according to an embodiment of the present invention.
Figure 5 shows a schematic cross sectional view of the ball joint shown in figure 4B.

### DETAILED DESCRIPTION OF THE INVENTION

The following describes examples of an improved ball joint in accordance with the present invention.

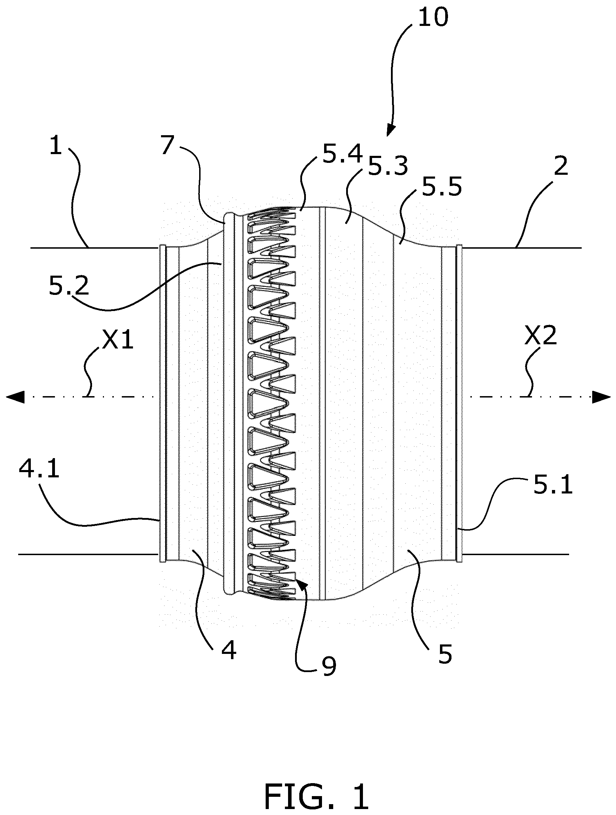

Figure 1 shows a duct assembly of a gas turbine engine comprising a ball joint (10). The duct assembly comprises a first duct and a second duct both being connected to each other through the ball joint (10). In particular, the ball joint (10) is arranged between a first tubular portion (1) of the first duct and a second tubular portion (2) of the second duct of the duct assembly, so that the ball joint (10) is attached to these tubular portions (1, 2) at their ends. The first tubular portion has a first longitudinal axis (X1) and the second tubular portion has a second longitudinal axis (X2).

This ball joint (10) shown in figure 1 comprises a housing that connects the two tubular portions (1, 2) of the duct assembly. This housing comprises an inner shroud (4) with a first end (4.1) that is in contact with the first tubular portion (1) and an outer shroud (5) with a first end (5.1) in contact with the second tubular portion (2).

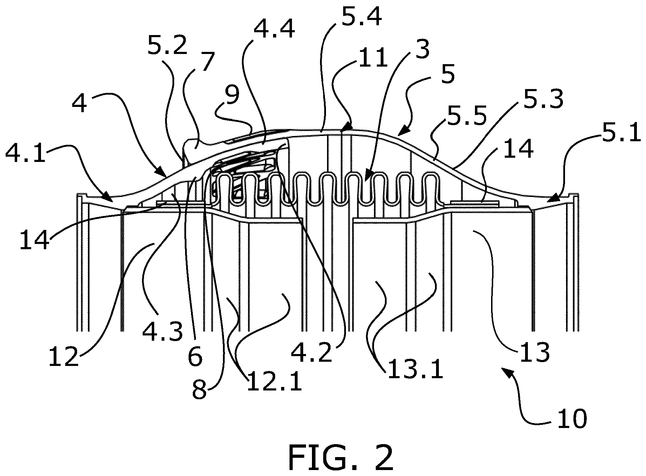

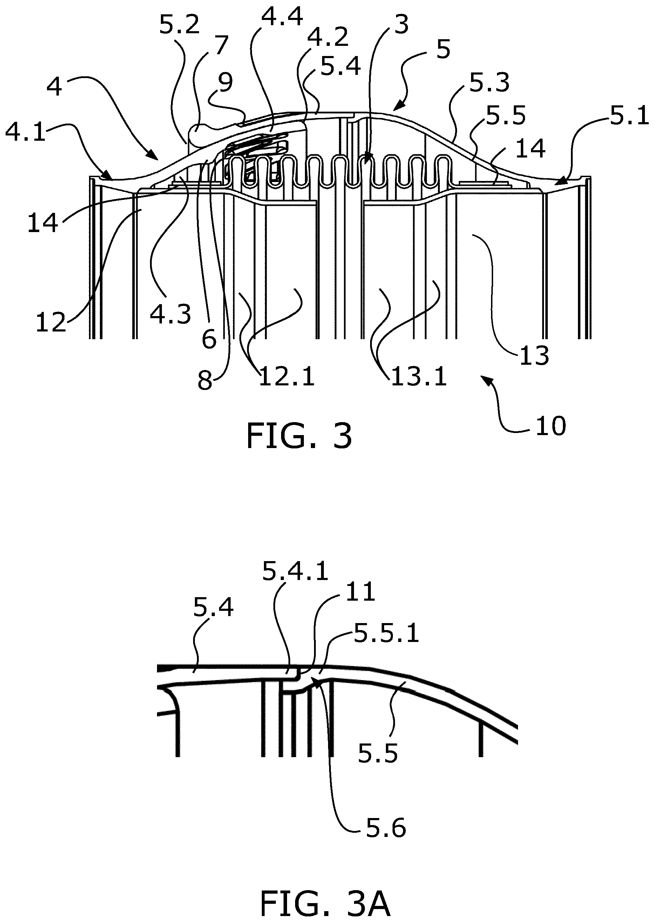

The ball joint (10) further comprises a bellow (3) as it can be shown on figures 2 and 3. These figures 2 and 3 show a cross sectional view of a portion of the ball joint (10) shown in figure 1. The bellow (3) is housed in the housing and is configured with limited flexure capability to accommodate variations in the angle between the longitudinal axes (X1, X2) of the first (1) and second (2) tubular portions of the duct assembly respectively. The housing is configured to hold the tubular portions (1, 2) against axial forces while allows the bellow (3) to flex within predetermined angle limits set by the ball joint (10).

The inner shroud (4) of the housing further comprises a second end (4.2) arranged over the bellow (3). The outer shroud (5) of the housing further comprises a second end (5.2) arranged above the inner shroud (4), specifically, the outer shroud (5) partially overlaps above the inner shroud (4). In this sense, an overlapping interface is provided between the inner shroud (4) and the outer shroud (5), the overlapping interface being understood as the contact surfaces between the shrouds (4, 5) as a result of the outer shroud (5) overlapping above the inner shroud (4). The inner shroud (4) also comprises an inner surface (4.3) faced to the bellow (3), and the outer shroud (5) comprises an outer surface (5.3) faced to the outside of the ball joint (10).

Moreover, the inner shroud (4) comprises a first thickening (6) located at a region between the first end (4.1) and the second end (4.2) of the inner shroud (4). On the other hand, the outer shroud (5) comprises a second thickening (7) located at the second end (5.2) of the outer shroud (5). In addition, the inner shrouds (4) comprises a spherical portion (4.4) extended between the first end (4.1) and the second end (4.2) of the inner shroud (4). The outer shroud (5) comprises a spherical portion (5.4) extended from the second end (5.2) of the outer shroud (5) to a point midway between the first (5.1) and second (5.2) end. These spherical portions (4.4, 5.4) are coincident in the sense that at least a portion of them are partially in contact with each other, as it can be observed in figures 2 and 3.

According to these figures 1-3, the first thickening (6) of the inner shroud (4) is a reinforcement ring that is annularly extended along the inner shroud (4) relative to the first longitudinal axis (X1), and the second thickening (7) of the outer shroud (5) is also a reinforcement ring that in this case is annularly extended along the outer shroud (5) relative to the second longitudinal axis (X2). As it can be observed in figures 2 and 3, the first thickening (6) is a projection that protrudes from the inner surface (4.3) of the inner shrouds (4) towards the inside of the ball joint (10) or the bellow (3). By contrast, the second thickening (7) is a projection that protrudes from the outer surface (5.3) of the outer shroud (5) towards the outside of the ball joint (10).

The ball joint (10) shown in these figures 1-3 further comprises a first liner (12) and a second liner (13). The first liner (12) is extended cantilevered from the first end (4.1) of the inner shroud (4) as a bracket on which the bellow (3) is supported at one end, and the second liner (13) is extended cantilevered from the first end (5.1) of the outer shroud (5) as a bracket on which the bellow (3) is supported at the other end. Thus, the bellow is connected to the housing through these liners (12, 13) since it is attached to the liners (12, 13). Specifically, the bellow (3) is attached to the liners (12, 13) by fixing means (14).

These liners (12, 13) comprises an extension (12.1, 13.1) that partially covers the bellow (3) so that the bellow (3) is housed in a space bounded by the housing of the ball joint (10) and the liners (12, 13) with their respective extensions (12.1, 13.1).

In another example (not shown), the bellow (3) is directly attached at one end to the first end (4.1) of the inner shroud (4) and at the other end to the first end (5.1) of the outer shroud (5). According to this example, the bellow (3) is connected to the housing through its direct link to the housing, the bellow (3) being supported by the first ends (4.1, 5.1) of the shrouds (4, 5) respectively.

The outer shroud (5) is formed by two portions, a spherical portion (5.4) and a remaining portion (5.5) extended from the spherical portion (5.4) to the first end (5.1) of the outer shroud (5). Each figure 2 and 3 shows a different example of link between the spherical portion (5.4) and the remaining portion (5.5) of the outer shroud (5). According to figure 2, the spherical portion (5.4) and the remaining portion (5.5) are joined each other by welding (11). On the other hand and according to figure 3, the spherical portion (5.4) and the remaining portion (5.5) are also joined each other by welding (11), however, the outer shroud (5) comprises a step (5.6) extended from the remaining portion (5.5) and below the spherical portion (5.4) so that a joining end (5.4.1) of the spherical portion (5.4) rests. Specifically, the step (5.6) is provided from an end (5.5.1) of the remaining portion (5.5) where the remaining portion (5.5) is welded to the spherical portion (5.4). This particular configuration of the outer shroud (5) and the welding (11) is shown in detailed in figure 3A.

The ball joint (10) shown in figures 1-3 further comprises a first ribbed pattern (8) on the inner shroud (4) and a second ribbed pattern (9) on the outer shroud (5). In particular, the first ribbed pattern (8) is indentations arranged annularly on the inner surface (4.3) of the inner shroud (4). These indentations are understood as grooves located on the inner surface (4.3) of the inner shroud (4). On the other hand, the second ribbed pattern (9) is projections arranged annularly on the outer surface (5.3) of the outer shroud (5).

According to the example shown in figures 1-3, both ribbed patterns (8, 9) has an isogrid configuration. Moreover, the first ribbed pattern (8) is arranged between the first thickening (6) and the second end (4.2) of the inner shroud (4), and particularly on the spherical portion (4.4) of the inner shroud (4). The second thickening (9) is arranged downstream of the second end (5.2) of the outer shroud (5), and particularly, on the spherical portion (5.4) of the outer shroud (5).

The ball joint (10) comprises a rest position where the ball joint (10) is not subjected to flexure stresses, that is, it is not rotated; and a plurality of operating positions where the ball joint (10) is subjected to flexure stresses, that is, it is rotated. The rotation of the ball joint (10) that allows the bellow (3) to flex will be deemed to mean when the shrouds (4, 5) of the housing rotate relative to each other as result of the tubular portions (1, 2) of the duct assembly being pressurized. That is, the ball joint rotation refers to bellow flexion rotation and not bellow torsion rotation.

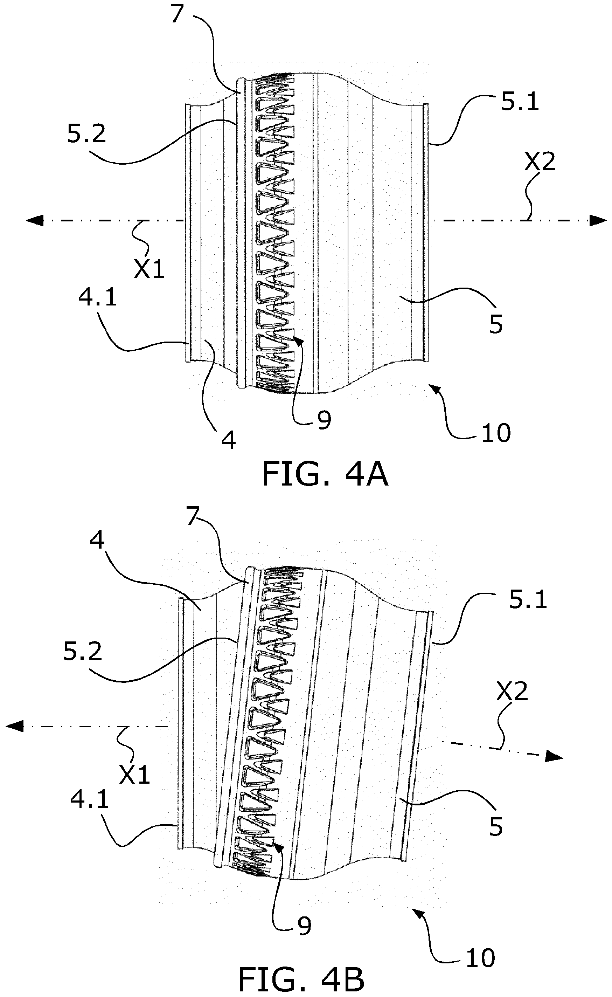

Figure 4A shows a frontal view of the ball joint (10) (the same as shown in figure 1) in a rest position. In this rest position, the overlapping interface between the inner shroud (4) and the outer shroud (5) is annularly constant along the ball joint (10). Further, figures 1-3 shown the ball joint (10) in the rest positions. In the rest position of the ball joint (10) according to an example, the first (8) and second (9) ribbed patterns are partially coincident along the ball joint due to the constant overlapping interface between the shroud (4, 5). Figure 4A also shows the longitudinal axes (X1, X2) that the tubular portions (not shown) of the duct assembly will have. In this case where the ball joint (10) is in the rest position. Both longitudinal axes (X1, X2) are parallel to each other as it is understood that the ducts have not displaced relative to each other and therefore the ball joint (10) has not been subjected to rotation.

Figure 4B shows a frontal view of the ball joint (10) (the same as shown in figure 1) in one operating position. In this operating position, the ball joint (10) is rotated with respect to its rest position so that the overlapping interface between the shrouds (4, 5) varies annularly along the ball joint (10) while the outer shroud (5) is still overlapping over the inner shroud (4). The rotation of the ball joint (10), also referred to the bellow flexion rotation, is further shown by the longitudinal axes (X1, X2) that the tubular portions (not shown) will have, in particular, due these longitudinal axes (X1, X2) are not parallel each other as shown in figure 4A of the rest position. That is, the rotation of the ball joint (10) shown in figure 4B corresponds to the rotation of the ball joint (10) around a first rotating axis (not shown) such that it leads to the bellow flexure and not to the bellow torsion. According to the view of figure 4B, the overlapping surface between the shrouds (4, 5) increases from the top to the bottom of the ball joint (10).

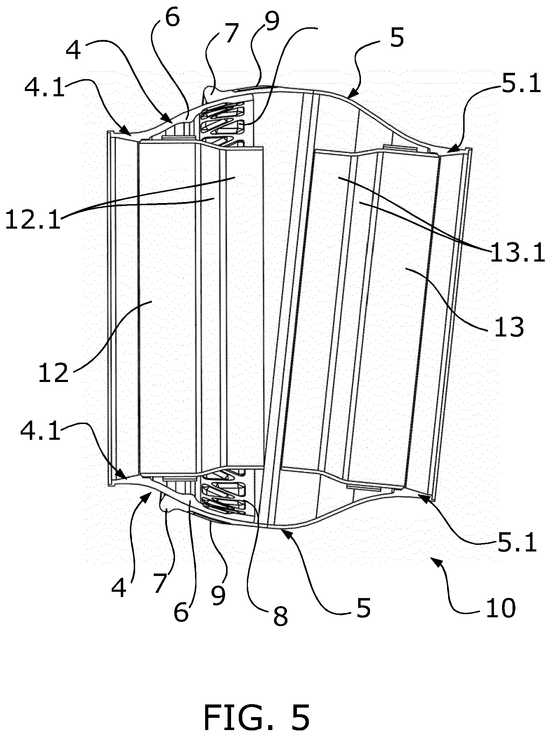

Figure 5 shows a cross sectional view of the ball joint (10) in the operating position of figure 4B without showing the bellow for a better view of the ball joint (10). The ball joint (10) shown in figure 5 corresponds to the ball joint (10) shown in figures 1 and 2 but without shown the bellow (3).

According to this figure 5, the overlapping interface is larger in the bottom of the ball joint (10) than in the top. In particular, it can be seen how the contact surface between the inner shrouds (4) and the outer shroud (5) is larger in the bottom of the ball joint (10) compared with the top of the ball joint (10) according to the view of this figure 5.

In addition, when the ball joint (10) is rotated as shown in figure 5, it can be seen how the position of the second thickening (7) in relation to the first thickening (6) varies annularly along the joint ball (10). In the top of the view of ball joint (10), the second thickening is located over the inner shroud (4) between the first thickening (6) and the second end (4.2) of the inner shroud (4). In the bottom of the view of the ball joint (10), the second thickening (7) is located over the inner shrouds (4) between the first end (4.1) of the inner shroud (4) and the first thickening (6).

By last, the inner (4) and outer (5) shrouds of the ball joint (10) described above in relation with figures 1-5 are 3D printed structures, that is, they have been manufacture by additive manufacturing.

## Claims

1. Ball joint (10) for a duct assembly of a gas turbine engine, the ball joint (10) comprising:
- a housing configured to connect a first (1) and second (2) tubular portions of the duct assembly, the first (1) and second (2) tubular portions having respective longitudinal axis (X1, X2),
- a bellow (3) arranged inside the housing and connected to the housing, the bellow (3) being configured with limited flexure capability to accommodate variations in the angle between the longitudinal axes (X1, X2) of the first (1) and second (2) tubular portions respectively,
the housing being further configured to hold the tubular portions (1, 2) against axial forces while allows the flexure of the bellow (3) within predetermined angle limits, the housing comprising:
• an inner shroud (4) extending from a first end (4.1) to a second end (4.2), the first end (4.1) being configured to be in contact with the first tubular portion (1) of the duct assembly and the second end (4.2) being located over the bellow (3), and
• an outer shroud (5) extending from a first end (5.1) to a second end (5.2), the first end (5.1) being configured to be in contact with the second tubular portion (2) of the duct assembly and the second end (5.2) being arranged above the inner shroud (4), so that the outer shroud (5) partially overlaps above the inner shroud (4), forming an overlapping interface between the inner shroud (4) and the outer shroud (5);
wherein
the overlapping interface between the inner shroud (4) and the outer shroud (5) is a contact region between surfaces of the inner shroud (4) and the outer shroud (5);
the inner shroud (4) comprises a first thickening (6) at a region located between the first end (4.1) and the second end (4.2) and a spherical portion (4.4) extending between the second end (4.2) and the first thickening (6), wherein the first thickening (6) is a reinforcement ring extending annularly along the inner shroud (4) and is configured as a projection in an inner surface (4.3) of the inner shroud (4) so that the projection protrudes towards the bellow (3);
the outer shroud (5) comprises a spherical portion (5.4) arising from the second end (5.2) and a second thickening (7) at its second end (5.2), wherein the second thickening (7) is a reinforcement ring extending annularly along the outer shroud (5) at its second end (5.2) and is configured as a projection in an outer surface (5.3) of the outer shroud (5) so that the projection protrudes towards outside the ball joint (10);
in a rest position where the ball joint (10) is not subjected to flexure stresses, the overlapping interface between the inner shroud (4) and the outer shroud (5) is annularly constant along the ball joint (10); and
in at least one operating position where the ball joint (10) is subjected to flexure stresses, the overlapping interface between the inner shroud (4) and the outer shroud (5) varies annularly along the ball joint (10) while the outer shroud (5) still overlaps over the inner shroud (4).

2. Ball joint (10) according to the previous claim further comprising a first (12) and second (13) liners that extend cantilevered from the first ends (4.1, 5,1) of the inner (4) and outer (5) shroud respectively, wherein the below (3) is supported at its ends on the first (12) and second (13) liners respectively.

3. Ball joint (10) according to the previous claim, wherein each liner (12, 13) comprises an extension (12.1, 13.1) partially covering the bellow (3) so that the bellow (3) being housed between the housing and the extensions (12.1, 13.1) of the liners (12, 13).

4. Ball joint (10) according to claim 1, wherein the bellow (3) is directly attached to the housing so that the bellow being supported at its ends on the first ends (4.1, 4.2) of the inner (4) and outer (5) shroud respectively.

5. Ball joint (10) according to any one of the previous claims, wherein:
- the inner shroud (4) comprises a first ribbed pattern (8) arranged annularly at an inner surface (4.3) of the inner shroud (4), the first ribbed pattern (8) corresponding to indentations on the inner surface (4.3) of the inner shroud (4); and
- the outer shroud (5) comprises a second ribbed pattern (9) arranged annularly at an outer surface (5.3) of the outer shroud (5), the second ribbed pattern (9) corresponding to projections on the outer surface (5.3) of the outer shroud (5).

6. Ball joint (10) according to the previous claim, wherein the second ribbed pattern (9) is arranged downstream of the second end (5.2) of the outer shroud (5) along a portion of the outer surface (5.3); and the first ribbed pattern (8) is arranged between the first thickening (6) and the second end (4.2) of the inner shroud (4).

7. Ball joint (10) according to any one of the claims 5 to 6, wherein the first (8) and second (9) ribbed pattern have an isogrid configuration.

8. Ball joint (10) according to any one of the previous claims, wherein both the inner shroud (4) and the outer shroud (5) are 3D printed structures.

9. Ball joint (10) according to any one of the previous claims, wherein the outer shroud (5) is formed by two portions, the spherical portion (5.4) and the remaining portion (5.5), and wherein these two portions (5.4, 5.5) are joined, preferably by welding (11).

10. Ball joint (10) according to the previous claims, wherein the two portions (5.4, 5.5) of the outer shroud (5) are joined by high energy beam welding, preferably laser welding, and wherein the remaining portion (5.5) comprises at its end (5.5.1) where it is welded to the spherical portion (5.4) a step (5.6) on which a joining end (5.4.1) of the spherical portion (5.4) rests.

11. A duct assembly of a gas turbine engine comprising a first duct with a first tubular portion (1), a second duct with a second tubular portion (2) and at least one ball joint (10) according to any one of the previous claims, wherein the first tubular portion (1) of the first duct is connected to the first end (4.1) of the inner shroud (4) of the at least one ball joint (10) and the second tubular portion (2) of the second duct is connected to the first end (5.1) of the outer shroud (5) of the at least one ball joint (10).

## Patentansprüche

1. Kugelgelenk (10) für eine Kanalanordnung eines Gasturbinenmotors, wobei das Kugelgelenk (10) Folgendes umfasst:
- ein Gehäuse, das dazu ausgebildet ist, einen ersten (1) und zweiten (2) rohrförmigen Abschnitt der Kanalanordnung zu verbinden, wobei der erste (1) und zweite (2) rohrförmige Abschnitt jeweils eine Längsachse (X1, X2) besitzen,
- einen Balg (3), der in dem Gehäuse angeordnet ist und mit dem Gehäuse verbunden ist, wobei der Balg (3) mit einer begrenzten Biegefähigkeit ausgebildet ist, um Schwankungen im Winkel zwischen den Längsachsen (X1, X2) des ersten (1) bzw. zweiten (2) rohrförmigen Abschnitts Rechnung zu tragen,
wobei das Gehäuse ferner dazu ausgebildet ist, die rohrförmigen Abschnitte (1, 2) gegen Axialkräfte zu halten und gleichzeitig die Biegung des Balgs (3) innerhalb vorbestimmter Winkelgrenzen zu erlauben, wobei das Gehäuse Folgendes umfasst:
• eine innere Ummantelung (4), die sich von einem ersten Ende (4.1) zu einem zweiten Ende (4.2) erstreckt, wobei das erste Ende (4.1) dazu ausgebildet ist, mit dem ersten rohrförmigen Abschnitt (1) der Kanalanordnung in Kontakt zu stehen, und das zweite Ende (4.2) sich über dem Balg (3) befindet, und
• eine äußere Ummantelung (5), die sich von einem ersten Ende (5.1) zu einem zweiten Ende (5.2) erstreckt, wobei das erste Ende (5.1) dazu ausgebildet ist, mit dem zweiten rohrförmigen Abschnitt (2) der Kanalanordnung in Kontakt zu stehen, und das zweite Ende (5.2) über der inneren Ummantelung (4) angeordnet ist, sodass die äußere Ummantelung (5) teilweise über die innere Ummantelung (4) überlappt und dabei eine überlappende Grenzfläche zwischen der inneren Ummantelung (4) und der äußeren Ummantelung (5) bildet;
wobei
die überlappende Grenzfläche zwischen der inneren Ummantelung (4) und der äußeren Ummantelung (5) ein Kontaktbereich zwischen Oberflächen der inneren Ummantelung (4) und der äußeren Ummantelung (5) ist;
die innere Ummantelung (4) eine erste Verdickung (6) in einem Bereich umfasst, der sich zwischen dem ersten Ende (4.1) und dem zweiten Ende (4.2) befindet, und einen kugelförmigen Abschnitt (4.4), der sich zwischen dem zweiten Ende (4.2) und der ersten Verdickung (6) erstreckt, wobei die erste Verdickung (6) ein Verstärkungsring ist, der sich ringförmig entlang der inneren Ummantelung (4) erstreckt, und als Vorsprung in einer Innenfläche (4.3) der inneren Ummantelung (4) ausgebildet ist, sodass der Vorsprung in Richtung des Balgs (3) vorspringt;
die äußere Ummantelung (5) einen kugelförmigen Abschnitt (5.4) umfasst, der von dem zweiten Ende (5.2) aufragt, und eine zweite Verdickung (7) an ihrem zweiten Ende (5.2), wobei die zweite Verdickung (7) ein Verstärkungsring ist, der sich ringförmig entlang der äußeren Ummantelung (5) an ihrem zweiten Ende (5.2) erstreckt und als Vorsprung in einer Außenfläche (5.3) der äußeren Ummantelung (5) ausgebildet ist, sodass der Vorsprung in Richtung zur Außenseite des Kugelgelenks (10) vorspringt;
in einer Ruhestellung, wo das Kugelgelenk (10) keinen Biegespannungen ausgesetzt ist, die überlappende Grenzfläche zwischen der inneren Ummantelung (4) und der äußeren Ummantelung (5) ringförmig entlang des Kugelgelenks (10) konstant ist; und
in mindestens einer Betriebsstellung, wo das Kugelgelenk (10) Biegespannungen ausgesetzt ist, die überlappende Grenzfläche zwischen der inneren Ummantelung (4) und der äußeren Ummantelung (5) ringförmig entlang des Kugelgelenks (10) schwankt, während die äußere Ummantelung (5) immer noch die innere Ummantelung (4) überlappt.

2. Kugelgelenk (10) nach dem vorherigen Anspruch, das ferner eine erste (12) und zweite (13) Auskleidung umfasst, die sich freitragend von den ersten Enden (4.1, 5.1) der inneren (4) bzw. äußeren (5) Ummantelung erstrecken, wobei der Balg (3) an seinen Enden auf der ersten (12) bzw. zweiten (13) Auskleidung gelagert ist.

3. Kugelgelenk (10) nach dem vorherigen Anspruch, wobei jede Auskleidung (12, 13) einen Fortsatz (12.1, 13.1) umfasst, der den Balg (3) teilweise bedeckt, sodass der Balg (3) zwischen dem Gehäuse und den Fortsätzen (12.1, 13.1) der Auskleidungen (12, 13) aufgenommen ist.

4. Kugelgelenk (10) nach Anspruch 1, wobei der Balg (3) direkt an dem Gehäuse befestigt ist, sodass der Balg an seinen Enden auf den ersten Enden (4.1, 4.2) der inneren (4) bzw. äußeren (5) Ummantelung gelagert ist.

5. Kugelgelenk (10) nach einem der vorherigen Ansprüche, wobei:
- die innere Ummantelung (4) ein erstes geripptes Muster (8) umfasst, das ringförmig auf einer Innenfläche (4.3) der inneren Ummantelung (4) angeordnet ist, wobei das erste gerippte Muster (8) Einkerbungen auf der Innenfläche (4.3) der inneren Ummantelung (4) entspricht; und
- die äußere Ummantelung (5) ein zweites geripptes Muster (9) umfasst, das ringförmig auf einer Außenfläche (5.3) der äußeren Ummantelung (5) angeordnet ist, wobei das zweite gerippte Muster (9) Vorsprüngen auf der Außenfläche (5.3) der äußeren Ummantelung (5) entspricht.

6. Kugelgelenk (10) nach dem vorherigen Anspruch, wobei das zweite gerippte Muster (9) stromabwärts von dem zweiten Ende (5.2) der äußeren Ummantelung (5) entlang eines Abschnitts der Außenfläche (5.3) angeordnet ist; und das erste gerippte Muster (8) zwischen der ersten Verdickung (6) und dem zweiten Ende (4.2) der inneren Ummantelung (4) angeordnet ist.

7. Kugelgelenk (10) nach einem der Ansprüche 5 bis 6, wobei das erste (8) und zweite (9) gerippte Muster eine Isogitter-Konfiguration haben.

8. Kugelgelenk (10) nach einem der vorherigen Ansprüche, wobei sowohl die innere Ummantelung (4) als auch die äußere Ummantelung (5) 3D-gedruckte Strukturen sind.

9. Kugelgelenk (10) nach einem der vorherigen Ansprüche, wobei die äußere Ummantelung (5) durch zwei Abschnitte gebildet wird, den kugelförmigen Abschnitt (5.4) und den verbleibenden Abschnitt (5.5), und wobei diese beiden Abschnitte (5.4, 5.5) verbunden sind, vorzugsweise durch Schweißen (11).

10. Kugelgelenk (10) nach den vorherigen Ansprüchen, wobei die beiden Abschnitte (5.4, 5.5) der äußeren Ummantelung (5) durch Hochenergiestrahlschweißen, vorzugsweise Laserschweißen, verbunden sind, und wobei der verbleibende Abschnitt (5.5) an seinem Ende (5.5.1), wo er mit dem kugelförmigen Abschnitt (5.4) verschweißt ist, eine Stufe (5.6) umfasst, auf der ein Verbindungsende (5.4.1) des kugelförmigen Abschnitts (5.4) ruht.

11. Eine Kanalanordnung eines Gasturbinenmotors, die einen ersten Kanal mit einem ersten rohrförmigen Abschnitt (1), einen zweiten Kanal mit einem zweiten rohrförmigen Abschnitt (2) und mindestens ein Kugelgelenk (10) nach einem der vorherigen Ansprüche umfasst, wobei der erste rohrförmige Abschnitt (1) des ersten Kanals mit dem ersten Ende (4.1) der inneren Ummantelung (4) des mindestens einen Kugelgelenks (10) verbunden ist und der zweite rohrförmige Abschnitt (2) des zweiten Kanals mit dem ersten Ende (5.1) der äußeren Ummantelung (5) des mindestens einen Kugelgelenks (10) verbunden ist.

## Revendications

1. Articulation à rotule (10) pour un ensemble de conduit d'un moteur à turbine à gaz, l'articulation à rotule (10) comprenant :
- un boîtier configuré pour raccorder une première (1) et une deuxième (2) portions tubulaires de l'ensemble de conduit, les première (1) et deuxième (2) portions tubulaires ayant des axes longitudinaux respectifs (X1, X2),
- un soufflet (3) disposé à l'intérieur du boîtier et relié au boîtier, le soufflet (3) étant configuré avec une capacité de flexion limitée pour accommoder les variations de l'angle entre les axes longitudinaux (X1, X2) des première (1) et deuxième (2) portions tubulaires respectivement,
le boîtier étant en outre configuré pour maintenir les portions tubulaires (1, 2) contre les efforts axiaux tout en permettant la flexion du soufflet (3) dans des limites angulaires prédéterminées, le boîtier comprenant :
• une virole intérieure (4) s'étendant d'une première extrémité (4.1) à une deuxième extrémité (4.2), la première extrémité (4.1) étant configurée pour être en contact avec la première portion tubulaire (1) de l'ensemble de conduit et la deuxième extrémité (4.2) étant située au-dessus du soufflet (3), et
• une virole extérieure (5) s'étendant d'une première extrémité (5.1) à une deuxième extrémité (5.2), la première extrémité (5.1) étant configurée pour être en contact avec la deuxième portion tubulaire (2) de l'ensemble de conduit et la deuxième extrémité (5.2) étant disposée au-dessus de la virole intérieure (4), de sorte que la virole extérieure (5) recouvre partiellement au-dessus de la virole intérieure (4), formant une interface de recouvrement entre la virole intérieure (4) et la virole extérieure (5) ;
dans lequel
l'interface de recouvrement entre la virole intérieure (4) et la virole extérieure (5) est une région de contact entre des surfaces de la virole intérieure (4) et de la virole extérieure (5) ;
la virole intérieure (4) comprend un premier épaississement (6) situé dans une région entre la première extrémité (4.1) et la deuxième extrémité (4.2) et une portion sphérique (4.4) s'étendant entre la deuxième extrémité (4.2) et le premier épaississement (6), dans lequel le premier épaississement (6) est une bague de renforcement s'étendant de manière annulaire le long de la virole intérieure (4) et configuré sous forme de saillie dans une surface intérieure (4.3) de la virole intérieure (4) de sorte que la saillie fait saillie vers le soufflet (3) ;
la virole extérieure (5) comprend une portion sphérique (5.4) issue de la deuxième extrémité (5.2) et un deuxième épaississement (7) au niveau de sa deuxième extrémité (5.2), dans laquelle le deuxième épaississement (7) est une bague de renforcement s'étendant de manière annulaire le long de la virole extérieure (5) au niveau de sa deuxième extrémité (5.2) et est configuré comme une saillie dans une surface extérieure (5.3) de la virole extérieure (5) de sorte que la saillie fasse saillie vers l'extérieur de l'articulation à rotule (10) ;
dans une position de repos où l'articulation à rotule (10) n'est pas soumise à des contraintes de flexion, l'interface de recouvrement entre la virole intérieure (4) et la virole extérieure (5) est annulairement constante le long de l'articulation à rotule (10) ; et
dans au moins une position de fonctionnement où l'articulation à rotule (10) est soumise à des contraintes de flexion, l'interface de recouvrement entre la virole intérieure (4) et la virole extérieure (5) varie de manière annulaire le long de l'articulation à rotule (10) tandis que la virole extérieure (5) recouvre encore la virole intérieure (4).

2. Articulation à rotule (10) selon la revendication précédente, comprenant en outre un premier (12) et un deuxième (13) revêtements qui s'étendent en porte-à-faux depuis les premières extrémités (4.1, 5.1) de la virole intérieure (4) et de la virole extérieure (5) respectivement, dans laquelle le soufflet (3) est supporté à ses extrémités sur le premier (12) et le deuxième (13) revêtements respectivement.

3. Articulation à rotule (10) selon la revendication précédente, dans laquelle chaque revêtement (12, 13) comprend une extension (12.1, 13.1) recouvrant partiellement le soufflet (3) de sorte que le soufflet (3) soit logé entre le boîtier et les extensions (12.1, 13.1) des revêtements (12, 13).

4. Articulation à rotule (10) selon la revendication 1, dans laquelle le soufflet (3) est directement fixé au boîtier de sorte que le soufflet soit supporté à ses extrémités sur les premières extrémités (4.1, 4.2) de la virole intérieure (4) et de la virole extérieure (5) respectivement.

5. Articulation à rotule (10) selon l'une quelconque des revendications précédentes, dans laquelle :
- la virole intérieure (4) comprend un premier motif nervuré (8) disposé de manière annulaire au niveau d'une surface intérieure (4.3) de la virole intérieure (4), le premier motif nervuré (8) correspondant à des indentations sur la surface intérieure (4.3) de la virole intérieure (4) ; et
- la virole extérieure (5) comprend un deuxième motif nervuré (9) disposé de manière annulaire au niveau d'une surface extérieure (5.3) de la virole extérieure (5), le deuxième motif nervuré (9) correspondant à des saillies sur la surface extérieure (5.3) de la virole extérieure (5).

6. Articulation à rotule (10) selon la revendication précédente, dans laquelle le deuxième motif nervuré (9) est disposé en aval de la deuxième extrémité (5.2) de la virole extérieure (5) le long d'une portion de la surface extérieure (5.3) ; et le premier motif nervuré (8) est disposé entre le premier épaississement (6) et la deuxième extrémité (4.2) de la virole intérieure (4).

7. Articulation à rotule (10) selon l'une quelconque des revendications 5 à 6, dans laquelle les premier (8) et deuxième (9) motifs nervurés ont une configuration en isogrille.

8. Articulation à rotule (10) selon l'une quelconque des revendications précédentes, dans laquelle la virole intérieure (4) et la virole extérieure (5) sont toutes deux des structures imprimées en 3D.

9. Articulation à rotule (10) selon l'une quelconque des revendications précédentes, dans laquelle la virole extérieure (5) est formée de deux portions, la portion sphérique (5.4) et la portion restante (5.5), et dans laquelle ces deux portions (5.4, 5.5) sont assemblées, de préférence par soudage (11).

10. Articulation à rotule (10) selon les revendications précédentes, dans laquelle les deux portions (5.4, 5.5) de la virole extérieure (5) sont assemblées par soudage par faisceau à haute énergie, de préférence soudage laser, et dans laquelle la portion restante (5.5) comprend à son extrémité (5.5.1) où elle est soudée à la portion sphérique (5.4) un épaulement (5.6) sur lequel repose une extrémité d'assemblage (5.4.1) de la portion sphérique (5.4).

11. Un ensemble de conduit d'un moteur à turbine à gaz comprenant un premier conduit avec une première portion tubulaire (1), un deuxième conduit avec une deuxième portion tubulaire (2) et au moins une articulation à rotule (10) selon l'une quelconque des revendications précédentes, dans lequel la première portion tubulaire (1) du premier conduit est reliée à la première extrémité (4.1) de la virole intérieure (4) de ladite au moins une articulation à rotule (10) et la deuxième portion tubulaire (2) du deuxième conduit est reliée à la première extrémité (5.1) de la virole extérieure (5) de ladite au moins une articulation à rotule (10).
